# EUROPÄISCHE PATENTSCHRIFT

(11) **EP 3 584 175 B1**
(45) Veröffentlichungstag und Bekanntmachung des Hinweises auf die Patenterteilung: **29.03.2023**
(21) Anmeldenummer: 19180001.0
(22) Anmeldetag: 13.06.2019
(51) Int. Cl.: B64G 1/10, B64G 1/40

(54) **VERWENDUNG ZUMINDEST EINER SEKUNDÄRSTRUKTUR IN EINEM RAUMFLUGKÖRPER, RAUMFLUGKÖRPER UND VERFAHREN**
SPACECRAFT AND METHOD OF USE OF AT LEAST ONE SECONDARY STRUCTURE IN A SPACECRAFT
UTILISATION D'AU MOINS UNE STRUCTURE SECONDAIRE DANS UN VÉHICULE SPATIAL, VÉHICULE SPATIAL ET PROCÉDÉ

(30) Priorität: 15.06.2018 DE 102018114401
(43) Veröffentlichungstag der Anmeldung: 25.12.2019
(73) Patentinhaber: ArianeGroup GmbH, 82024 Taufkirchen (DE)
(72) Erfinder: Gerding, Patrick, 28199 Bremen (DE); Quatmann, Michael, 28199 Bremen (DE); Brünger, Moritz, 28199 Bremen (DE)
(74) Vertreter: Marschall, Stefan

(56) Entgegenhaltungen:
- WO-A2-2015/031699
- DE-A1-102007 044 389
- DE-A1-102011 083 553
- DE-B3-102011 119 921
- US-A- 4 986 495

## Beschreibung

Die Erfindung betrifft eine Verwendung zumindest einer Sekundärstruktur in einem Raumflugkörper, einen Raumflugkörper und ein Verfahren zur Herstellung eines Raumflugkörpers.

Bei Raumflugkörpern und auch bei Luftfahrzeugen wird aus konstruktiver Sicht generell zwischen einer Primärstruktur und Sekundärstrukturen unterschieden. Die Primärstruktur übernimmt strukturelle bzw. mechanische Funktionen, im Folgenden auch strukturelle Primärfunktionen genannt, wie die Aufnahme von Hauptlasten und die Halterung der Sekundärstrukturen. Die Sekundärstrukturen werden zur Erfüllung bestimmter Sekundärfunktionen benötigt. Sie sind an der Primärstruktur befestigt und dienen herkömmlicherweise ausschließlich zur Erfüllung der jeweiligen Sekundärfunktion. Beispiele für Sekundärstrukturen sind Versorgungsleitungen wie Tankleitungen. Die Primärstruktur und die Sekundärstrukturen sind vollständig voneinander getrennte Strukturen.

In jüngster Zeit sind Konzepte entstanden, die vorsehen, zumindest einige Sekundärstrukturen in die Primärstruktur zu integrieren. Dies führt zu zusätzlichen Modifikationen der ursprünglichen Primärstruktur, wie zum Beispiel durch Versteifungen für lokale Lasten, zusätzliche Schnittstellen, sowie zu einem erhöhtem Integrationsaufwand. Ein Beispiel für eine Integration einer Sekundärstruktur in eine Primärstruktur bei einem Luftfahrzeug ist in der Patentanmeldung DE 10 2011 083 553 A1 gezeigt. Ein Beispiel einer Integration einer Sekundärstruktur an eine vorgegeben Primärstruktur bei einem Luft- oder Raumfahrzeug ist in der Patentanmeldung DE 10 2007 044 389 A1 gezeigt.

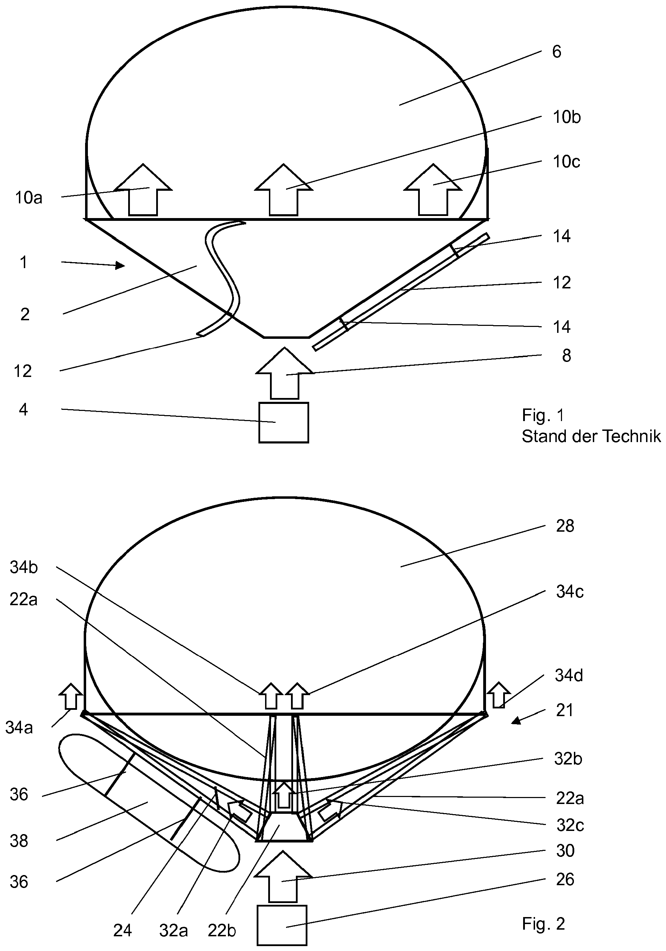

In Figur 1 ist ein herkömmlicher Triebwerkträger 1 eines Raumflugkörpers wie einer Trägerrakete gezeigt. Der Triebwerkträger 1 umfasst eine Primärstruktur 2, die ein Triebwerk 4 und einen Tank 6 verbindet. Über die Primärstruktur 2 wird eine Hauptlast, hier ein Triebwerksschub 8, an die Trägerrakete bzw. deren restliche Struktur übertragen (10a, 10b, 10c). Die Primärstruktur 2 ist hierzu eine versteifte Kegelschale, die an einer umlaufenden Schnittstelle, beispielsweise ein Tank-Skirt, mit dem Tank 6 verbunden ist. Zudem dient die Primärstruktur 2 zur Befestigung von Sekundärstrukturen 12. Die Sekundärstrukturen 12 umfassen hier mehrere Fluidleitungen bzw. Triebwerksleitungen zur Treibstoffversorgung des Triebwerks 4. Die Sekundärstrukturen 12 sind außen an der Primärstruktur 2 mittels Halterungen 14 angehängt bzw. befestigt.

Aufgabe der Erfindung ist es, eine alternative Verwendung einer Sekundärstruktur in einem Raumflugkörper und einen Raumflugkörper mit einem reduzierten Gesamtgewicht und einem reduzierten Integrationsaufwand zu schaffen. Zudem ist es Aufgabe der Erfindung, ein Verfahren zur Herstellung eines derartigen Raumflugkörpers bereitzustellen, sowie eine Verwendung einer Sekundärstruktur in einem Raumflugkörper zu schaffen. Zudem ist es Aufgabe der Erfindung, die Durchführung des Verfahrens effizient und zuverlässig zu gestalten. Diese Aufgabe wird gelöst durch eine Verwendung zumindest einer Sekundärstruktur mit den Merkmalen des Patentanspruchs 1, durch einen Raumflugkörper mit den Merkmalen des Patentanspruchs 2 und durch ein Verfahren mit den Merkmalen des Patentanspruchs 3.

Erfindungsgemäß wird zumindest eine Sekundärstruktur in einem Raumflugkörper und dergleichen zumindest abschnittsweise als Primärstruktur verwendet. Ein derartiger Raumflugkörper zeichnet sich durch ein reduziertes Gewicht aus.

Ein erfindungsgemäßer Raumflugkörper hat zumindest eine Sekundärstruktur, die strukturelle Primärfunktionen einer eigentlichen Primärstruktur übernimmt bzw. erfüllt. Eine herkömmlicherweise die strukturelle Primärfunktionen übernehmende Primärstruktur als separate Struktur ist in diesem Raumflugkörperbereich aufgelöst und in die Sekundärstruktur integriert. Die Sekundärstrukturen sind derart positioniert, orientiert und ausgeführt, dass sie die Hauptlasten an dieser Stelle aufnehmen und weiterleiten. Als Vorteil ergibt sich ein reduziertes Gesamtgewicht, da die Primärstruktur in diesem Raumflugkörperbereich als eigene Struktur aufgelöst ist, da die Sekundärstruktur nicht nur ihre eigentliche Sekundärfunktion übernimmt, sondern ebenfalls die strukturellen Primärfunktionen der Primärstruktur wie Aufnehmen eines Triebwerkschubs und Aufnahmen weiterer Sekundärstrukturen. Die Primärstruktur entfällt somit im Bereich der Sekundärstruktur. Zudem ergibt sich ein reduzierter Integrationsaufwand, da die herkömmliche Befestigung der Sekundärstruktur an der Primärstruktur entfällt. Der erfindungsgemäße Raumflugkörper hat somit eine multifunktionale Sekundärstruktur. Erfindungsgemäß wird die Sekundärstruktur zumindest abschnittsweise als Primärstruktur in Raumfahrzeugen verwendet.

Gemäß der Erfindung ist eine Sekundärstruktur in Form von Fluidleitungen und eines Fluidverteilersystems, in Form eines Heliumtanks oder in Form einer Elektronikbox dazu eingerichtet, einen Triebwerkschub zu übertragen.

Mit anderen Worten, erfindungsgemäß hat der Raumflugkörper zumindest eine Sekundärstruktur, die primäre Strukturfunktionen einer Primärstruktur zumindest abschnittsweise übernimmt.

Als Raumflugkörper werden unter anderem Trägerraketen wie Unterstufen, Oberstufen, Satelliten und Raumsonden, Raumfahrzeuge, Raumschiffe, Raumkapseln und Raumstationen wie die ISS, Tanks, Intertankstrukturen, Nutzlaststrukturen, Nutzlastadapter sowie jeweils deren Teile verstanden. Diese Aufzählung ist beispielhaft und nicht beschränkend. Eine beispielhafte Fertigungsmethode zur Umsetzung der erfindungsgemäßen Lösung ist die Verwendung der additiven Fertigung (Additive Manufacturing)

Ein erfindungsgemäßes Verfahren zur Schaffung eines Raumflugkörpers, dessen zumindest eine Sekundärstruktur strukturelle Primärfunktionen übernimmt, wird in Anspruch 3 bereitgestellt.

Es wird bevorzugterweise eine Optimierung durchgeführt, in der ein frei verfügbarer Designraum zwischen den Randbedingungen mit beispielsweise finiten Elementen vernetzt wird. Der Designraum bzw. dessen Volumen kann dann mit Hilfe einer Zielfunktion, zum Beispiel einer Steifigkeitsmaximierung und/oder einer Minimierung der Formänderungsenergie, bei Einhaltung weiterer Randbedingungen wie zum Beispiel einer ausreichenden Festigkeit und Stabilität hinsichtlich der aufgebrachten strukturellen Lasten in Richtung der Primärlastpfade minimiert werden.

Im dritten Schritt wird in Kenntnis der Primärlastpfade die zumindest eine Sekundärstruktur zumindest abschnittsweise in Übereinstimmung oder nahezu in Übereinstimmung mit den Primärlastpfaden gebracht. Die Formulierung *"*in Übereinstimmung oder nahezu in Übereinstimmung*"* bedeutet im Folgenden auch *"*entlang der Primärlastpfade*"*.

Selbstverständlich kann der erste Schritt auch die Bestimmung bzw. Ermittlung der Primärlastpfade und der zweite Schritt die Bestimmung bzw. Auswahl bzw. Festlegung der zumindest einen Sekundärstruktur umfassen.

Als Ergebnis wird ein Raumflugkörper geschaffen, der zumindest eine Sekundärstruktur aufweist, die strukturelle Primärfunktionen der Primärstruktur abschnittsweise übernimmt. Die Primärstruktur ist im Bereich der zumindest einen multifunktionalen Sekundärstruktur-Aufnahme von strukturellen Primärfunktionen und Erfüllung eigentlicher Sekundärfunktionen - als eigenständige, einzelne Struktur aufgelöst bzw. als eigenständige, einzelne Struktur nicht vorhanden. Somit zeichnet sich ein derartiger Raumflugkörper durch ein geringeres Gewicht und durch einen geringeren Installationsaufwand als bekannte Raumflugkörper aus.

Insbesondere ist es aus Gründen der optimalen Erfüllung der Sekundärfunktionen vorteilhaft, wenn eigene Randbedingungen der zumindest einen Sekundärstruktur sowie die jeweiligen strukturellen Primärfunktionen und Sekundärfunktionen bei der Positionierung der zumindest einen Sekundärstruktur entlang den Primärlastpfaden berücksichtigt werden. Dabei kann die Sekundärstruktur unter Einhaltung dieser Funktionen und der eigenen Randbedingungen modifiziert bzw. angepasst werden, um sowohl die strukturelle Primärfunktionen als auch die Sekundärfunktionen bestmöglich zu erfüllen.

Um eine strukturelle Schwächung des Raumflugkörpers in Abschnitten der Primärlastpfade zu verhindern, entlang derer sich keine Sekundärstruktur erstreckt, kann eine Hilfsstruktur zur Übernahme der strukturellen Primärfunktionen angeordnet werden. Beispiele hierfür sind Bereiche zwischen verschiedenen Sekundärstrukturen. Diese können durch Streben, Verlängerungen, Befestigungen und dergleichen stabilisiert werden.

Zur konstruktiven bzw. gestalterischen Optimierung des geschaffenen Gesamtsystems, umfassend zumindest eine Sekundärstruktur und/oder Hilfsstruktur, kann das Gesamtsystem dimensioniert werden. Hierfür werden die Lasten (sowohl Primär- als auch Sekundärlasten) in neuen Analysen aufgebracht. Anhand der Ergebnisse wird das Gesamtsystem angepasst, in dem an Stellen, an denen Materialwerte, Verschiebungen oder andere Grenzen überschritten werden, zusätzliches Material vorgesehen wird, beispielsweise in Form von zusätzlichen Versteifungen oder höheren Wandstärken, und beispielsweise an Stellen mit hoher Sicherheit Material reduziert wird. Dieser Prozess wird in so vielen Iterationen durchlaufen, bis das Ergebnis optimiert ist.

Das Verfahren ist vornehmlich computergestützt, kann jedoch auch analytisch ausgeführt werden. Insbesondere wird auch ein Computerprogrammprodukt, umfassend Befehle, die bei der Ausführung des Programms durch einen Computer diesen veranlassen, das Verfahren durchzuführen, sowie ein computerlesbares Speichermedium, umfassend Befehle, die bei der Ausführung durch einen Computer diesen veranlassen, das erfindungsgemäße Verfahren durchzuführen, beansprucht. Das Computerprogrammprodukt und das computerlesbare Speichermedium ermöglichen eine effiziente und zuverlässige Durchführung des erfindungsgemäßen Verfahrens.

Sonstige vorteilhafte Ausführungsbeispiele der Erfindung sind Gegenstand weiterer Unteransprüche.

Im Folgenden wird ein bevorzugtes Ausführungsbeispiel der Erfindung anhand der anliegenden stark vereinfachten Figuren erläutert. Es zeigen
- Figur 1: einen Triebwerkträger eines Raumflugkörpers mit zumindest einer Sekundärstruktur und Primärstruktur gemäß dem Stand der Technik,
- Figur 2: einen Triebwerkträger eines erfindungsgemäßen Raumflugkörpers mit einer multifunktionalen Sekundärstruktur, und
- Figur 3: ein Ablaufdiagramm eines bevorzugten erfindungsgemäßen Verfahrens zur Herstellung des erfindungsgemäßen Raumflugkörpers.

In Figur 2 ist ein beispielhafter Triebwerkträger 21 eines erfindungsgemäßen Raumflugkörpers gezeigt. Der Triebwerkträger 21 umfasst eine Sekundärstruktur 22a, 22b und eine Hilfsstruktur 24, die ein Triebwerk 26 und einen Tank 28 verbindet. Eine Primärstruktur wie bei dem in Figur 1 illustrierten Stand der Technik ist nicht vorhanden, da diese bzw. deren strukturellen Primärfunktionen erfindungsgemäß die Sekundärstruktur 22a, 22b und hier zusätzlich die Hilfsstruktur 24 übernimmt. Die Sekundärstruktur 22a, 22b ist in Ausrichtung und Positionierung sowie Form und Materialverhalten so ausgelegt, dimensioniert und angepasst, dass sie die strukturellen Primärfunktionen der Primärstruktur des Triebwerkträgers 21 übernimmt.

Die Sekundärstruktur 22a, 22b besteht aus einer Vielzahl von Fluidleitungen bzw. Triebwerksleitungen 22a und aus einem Fluidverteilsystem 22b zur Treibstoffversorgung des Triebwerks 26. Aus Gründen der Übersichtlichkeit sind zwei Fluidleitungen stellvertretend für alle Fluidleitungen mit dem Bezugszeichen 22a versehen. Die Fluidleitungen 22a erstrecken sich über den Umfang verteilt von dem zentralen Fluidverteilersystem 22b und enden hier auf gleicher vertikaler Höhe des Tanks 28. Die Sekundärstruktur 22a, 22b erfüllt somit neben ihrer eigentlichen Sekundärfunktion *"*Treibstoff leiten*"* die strukturelle Primärfunktion *"*Übertragung von Hauptlasten, die durch das Triebwerk entstehen, an den Tank und die restliche Struktur der Trägerrakete bzw. Übertragen eines Triebwerksschubs*"*. Zudem wird über die Sekundärstruktur 22a, 22b der zentrale Triebwerkschub 30 in einzelne Lastanteile 32a bis 32c und 34a bis 34d aufgeteilt.

Die Hilfsstruktur 24 ist hier eine Versteifung in Form von Querverstrebungen zwischen einzelnen Fluidleitungen 22a im Bereich eines an der Sekundärstruktur 22a,22b über Halterungen 36 befestigten Heliumtanks 38. Die Sekundärstruktur 22a, 22b übernimmt somit neben der strukturellen Primärfunktion *"*Übertragen eines Triebwerksschubs*"* ebenfalls die strukturelle Primärfunktion *"*Anbringung bzw. Halterung von Equipment*"*.

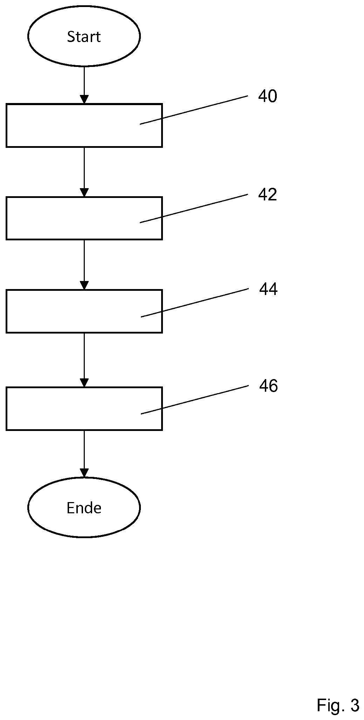

Im Folgenden wird ein bevorzugtes erfindungsgemäßes Verfahren anhand von Figur 3 mit Bezugnahme zu den Figuren 1 und 2 erläutert. Das Verfahren ist computergestützt und als solches in ein Computerprogramm(produkt) übertragen. In dem Beispiel handelt es sich um einen Triebwerkträger mit Fluidleitungen.

In einem ersten Schritt 40 werden Funktionen und Randbedingungen des Triebwerkträgers und der Fluidleitungen bestimmt bzw. erfasst. Wesentliche Funktionen des Triebwerkträgers sind das *"*Übertragen eines Triebwerksschubs sowie die Anbringung von Sekundärstrukturen und von Equipment*"*. Eine wesentliche Funktion der Fluidleitungen ist der *"*Transport von flüssigen und gasförmigen Fluiden von einem Tank zu einem Triebwerk*"*. Wie in Figur 1 gezeigt ist herkömmlicherweise zur Erfüllung der Funktionen des Triebwerkträgers eine Primärstruktur 2 vorgesehen. Zur Erfüllung der Funktionen der Fluidleitungen ist herkömmlicherweise eine Sekundärstruktur 12 vorgesehen.

Erfindungsgemäß wird nun als wesentliche strukturelle Primärfunktion der Primärstruktur die *"*Übertragung der Hauptlasten, die durch das Triebwerk entstehen, an den Tank und die restliche Struktur der Trägerrakete*"*, erfasst. Als weitere wesentliche strukturelle Primärfunktion wird die *"*Halterung der Sekundärstruktur und des Equipments*"* erfasst. Randbedingungen der Primärstruktur 2 sind die Einleitung des Triebwerkschubs 8 am unteren Kardanpunkt, ein Interface bzw. eine Schnittstelle zum Tank 4 nach oben und die geometrische Beschränkung durch einen Tankdom nach oben hat.

Die Sekundärstruktur 22a, 22b besteht in diesem Fall aus Fluidleitungen (inkl. einem Fluidverteilersystem). Als wesentliche Funktion der Fluidleitungen wird der *"*Transport von flüssigen und gasförmigen Fluiden zwischen Tank 28 und Triebwerk 26*"* erfasst. Die Randbedingungen der Sekundärstruktur 12 sind Ein- und Ausgangspunkte, zwischen denen Fluide transportiert werden müssen, Innendurchmesser sowie die Materialkompatibilität mit den jeweiligen Fluiden.

In einem zweiten Schritt 42 werden Primärlastpfade bestimmt, beispielsweise mit Hilfe eines sogenannten Finite-Elemente-Optimierers wie Altair OptiStruct^{®}. Die Primärlastpfade werden mittels einer computergestützten Gestaltungs- bzw. Topologieoptimierung bzw. einem Gestaltungs- bzw. Topologieoptimierungsprogramm bestimmt.

Mit Bezug zu Figur 2 wird hierzu ein Volumen zwischen dem Triebwerk 26 und Tank 28, abzüglich eines Raumes für Equipments, dem Tankdom und einem Mindestabstand der Elemente untereinander, zum Beispiel Tank, Triebwerk und Equipments, mit finiten Elementen vernetzt. Nach Aufbringen der im ersten Schritt beispielhaft genannten Randbedingungen und der Triebwerkslasten wie dem Triebwerkschub 30 wird das Netz aus Elementen mit Hilfe einer Zielfunktion reduziert. Die Zielfunktion kann zum Beispiel lauten: Maximierung der Steifigkeit und/oder Minimierung der Formänderungsenergie. Eine Randbedingung kann sein: Das Volumen soll kleiner sein als ein Prozentteil eines Designraums, welcher der Größenordnung des Volumens der Sekundärstruktur entspricht.

In einem dritten Schritt 44 erfolgt die Positionierung der Sekundärstruktur 22a, 22b und Hilfsstrukturen 24 entlang den Primärlastpfaden.

Da die meisten Fluidleitungen auf dem Triebwerkträger Fluide zwischen Tanks 28 und Triebwerk 26 transportieren, lassen sich viele Fluidleitungen 22a, (inkl. Fluidverteilersystem 22b) finden, deren Randbedingungen eine Positionierung zwischen Tank 28 und Einleitung des Triebwerkschubs 30 zulassen. Die Fluidleitungen 22a, 22b werden entsprechend der Primärlastpfade positioniert und im Optimierer vernetzt. In einer erneuten Optimierung, die die Fluidleitungen 22a, 22b berücksichtigt, werden die Primärlastpfade bestimmt, an denen zusätzliches Material notwendig ist. Hier werden dem neuen Gesamtsystem, umfassend die Sekundärstruktur 22a, 22b und die Hilfsstruktur 24, konstruktiv zusätzliche Hilfsstrukturen 24 hinzugefügt.

In einem vierten Schritt 46 werden in finite Elemente Analysen die Primärlasten wie die Triebwerkslasten und Sekundärlasten wie Equipmentlasten auf das in den Schritten 1 bis 3 (40, 42, 44) computergenerierte Modell des Triebwerkträgers aufgebracht. Die Sekundärstruktur 22a, 22b wird dimensioniert. An Stellen, an denen gegebene Grenzen von Material oder Verschiebung überschritten werden, wird beispielsweise die Leitungswandstärke oder die Anzahl oder das Volumen der Stützstrukturen erhöht. An Stellen, an denen hohe Sicherheit herrscht, werden diese beispielsweise hingegen verringert. Als Ergebnis wird ein Triebwerkträger 21 ohne eine eigenständige Primärstruktur, dafür aber mit einer multifunktionalen Sekundärstruktur 22a, 22b geschaffen. Die Sekundärstruktur 2a, 22b übernimmt neben ihrer eigentlichen Sekundärfunktion *"*Treibstoff leiten*"* die strukturellen Primärfunktionen einer Primärstruktur *"*Übertragung der Hauptlasten, die durch das Triebwerk 26 entstehen, an den Tank 28 und die restliche Struktur der Trägerrakete, sowie Halterung von Equipment 38*"*.

### Bezugszeichenliste

- 1: Triebwerkträger
- 2: Primärstruktur
- 4: Triebwerk
- 6: Tank
- 8: Triebwerkschub
- 10a, b, c: Schublast
- 12: Sekundärstruktur (hier: Fluidleitungen)
- 14: Halterung

- 21: Triebwerkträger
- 22a, 22b: Sekundärstruktur (hier: Fluidleitungen und Fluidverteilersystem)
- 24: Hilfsstruktur (Hier: Versteifungen)
- 26: Triebwerk
- 28: Tank
- 30: Triebwerkschub
- 32a, b, c: Lastanteil
- 34a bis d: Lastanteil
- 36: Halterung
- 38: Heliumtank (hier beispielhaft Equipment, kann auch eine strukturelle Primärfunktionen übernehmende Sekundärstruktur sein)
- 40: erster Schritt (Erfassen der Funktionen und Randbedingungen)
- 42: zweiter Schritt (Bestimmung der Primärlastpfade)
- 44: dritter Schritt (Positionierung der Sekundärstrukturen und Hilfsstrukturen)
- 46: vierter Schritt (Dimensionierung)

## Patentansprüche

1. Verwendung zumindest einer Sekundärstruktur in Form von Fluidleitungen (22a) und eines Fluidverteilersystems (22b), in Form eines Heliumtanks (38) oder in Form einer Elektronikbox in einem Raumflugkörper zumindest abschnittsweise als Primärstruktur zum Übertragen eines Triebwerkschubs (30).

2. Raumflugkörper mit zumindest einer Sekundärstruktur in Form von Fluidleitungen (22a) und eines Fluidverteilersystems (22b), in Form eines Heliumtanks (38) oder in Form einer Elektronikbox, wobei die Sekundärstruktur strukturelle Primärfunktionen zum Übertragen eines Triebwerkschubs (30) übernimmt.

3. Verfahren zur Herstellung eines Raumflugkörpers gemäß Anspruch 2, mit den Schritten:
• Bestimmen von zumindest einer Sekundärstruktur in Form von Fluidleitungen (22a) und eines Fluidverteilersystems (22b), in Form eines Heliumtanks (38) oder in Form einer Elektronikbox, wobei die Sekundärstruktur strukturelle Primärfunktionen zum Übertragen eines Triebwerkschubs (30) übernehmen soll,
• Bestimmen von Primärlastpfaden, und
• Positionieren der zumindest einen Sekundärstruktur (22a, 22b) zumindest abschnittsweise in Übereinstimmung oder nahezu in Übereinstimmung mit den Primärlastpfaden.

4. Verfahren nach Patentanspruch 3, wobei bei der Positionierung der zumindest einen Sekundärstruktur (22a, 22b) Randbedingungen und/oder Sekundärfunktionen der Sekundärstruktur (22a, 22b) berücksichtigt werden.

5. Verfahren nach Patentanspruch 3 oder 4, wobei bei Primärlastpfaden, entlang derer sich keine Sekundärstruktur (22a, 22b) erstreckt, eine Hilfsstruktur (24) zur Übernahme von strukturellen Primärfunktionen angeordnet wird.

6. Verfahren nach Patentanspruch 3, 4 oder 5, wobei die Sekundärstruktur (22a, 22b) und/oder, wenn von Anspruch 5 abhängig, die Hilfsstruktur (24) optimiert werden.

## Claims

1. Use of at least one secondary structure in the form of fluid lines (22a) and a fluid distribution system (22b), in the form of a helium tank (38), or in the form of an electronics box, in a spacecraft, at least in sections, as a primary structure for the transmission of an engine thrust (30).

2. Spacecraft with at least one secondary structure in the form of fluid lines (22a) and a fluid distribution system (22b), in the form of a helium tank (38), or in the form of an electronics box, wherein
the secondary structure performs primary structural functions for the transmission of an engine thrust (30) .

3. Method for the manufacture of a spacecraft according to Claim 2, with the steps:
- Determination of at least one secondary structure in the form of fluid lines (22a) and a fluid distribution system (22b), in the form of a helium tank (38), or in the form of an electronics box, wherein
the secondary structure is designed to undertake primary structural functions for the transmission of an engine thrust (30),
- Determination of primary load paths, and
- Positioning of the at least one secondary structure (22a, 22b), at least in sections, in accordance with, or nearly in accordance with, the primary load paths.

4. Method according to Patent Claim 3, wherein
limiting conditions, and/or secondary functions, of the secondary structure (22a, 22b) are taken into account in the positioning of the at least one secondary structure (22a, 22b).

5. Method according to Patent Claim 3 or 4, wherein
in primary load paths, along which no secondary structure (22a, 22b) extends, an auxiliary structure (24) is arranged to undertake primary structural functions.

6. Method according to Patent Claim 3, 4 or 5, wherein
the secondary structure (22a, 22b), and/or, dependent on Claim 5, the auxiliary structure (24), are optimised.

## Revendications

1. Utilisation d'au moins une structure secondaire sous la forme de conduits de fluide (22a) et d'un système de distribution de fluide (22b), sous la forme d'un réservoir d'hélium (38) ou sous la forme d'un boîtier électronique dans un engin spatial au moins en partie en tant que structure primaire pour transmettre une poussée de propulsion (30).

2. Engin spatial avec au moins une structure secondaire sous la forme de conduits de fluide (22a) et d'un système de distribution de fluide (22b), sous la forme d'un réservoir d'hélium (38) ou sous la forme d'un boîtier électronique, sachant que la structure secondaire prend en charge des fonctions primaires structurelles pour transmettre une poussée de propulsion (30).

3. Procédé de fabrication d'un engin spatial selon la revendication 2, avec les étapes suivantes :
• détermination d'au moins une structure secondaire sous la forme de conduites de fluide (22a) et d'un système de distribution de fluide (22b), sous la forme d'un réservoir d'hélium (38) ou sous la forme d'un boîtier électronique, sachant que la structure secondaire doit prendre en charge des fonctions primaires structurelles pour transmettre une poussée de propulsion (30),
• détermination de lignes de charge primaires et
• positionnement d'au moins une structure secondaire (22a, 22b) au moins en partie en harmonie ou presqu' en harmonie avec les lignes de charge primaires.

4. Procédé selon la revendication 3, sachant que des conditions marginales et/ou des fonctions secondaires de la structure secondaire (22a, 22b) sont prises en considération lors du positionnement d'au moins une structure secondaire (22a, 22b).

5. Procédé selon la revendication 3 ou 4, sachant que pour les lignes de charge primaires, le long desquelles aucune structure secondaire (22a, 22b) ne s'étend, une structure auxiliaire (24) est disposée pour la prise en charge des fonctions primaires structurelles

6. Procédé selon la revendication 3, 4 ou 5, sachant que la structure secondaire (22a, 22b) et/ou, si dépendant de la revendication 5, la structure auxiliaire (24) sont optimisées.
